(19) Europäisches Patentamt

European Patent Office

Office européen des brevets

(11) Veröffentlichungsnummer: **0 414 868 B1**

(12) **EUROPÄISCHE PATENTSCHRIFT**

(45) Veröffentlichungstag der Patentschrift: **29.06.94**

(21) Anmeldenummer: **90904248.3**

(22) Anmeldetag: **17.03.90**

(86) Internationale Anmeldenummer:
**PCT/DE90/00203**

(87) Internationale Veröffentlichungsnummer:
**WO 90/11318 (04.10.90 90/23)**

(51) Int. Cl.⁵: **C08J 9/00**

(54) **VERFAHREN ZUR HERSTELLUNG EINES FLAMMWIDRIGEN, ELASTISCHEN POLYURETHAN-WEICHSCHAUMSTOFFES.**

(30) Priorität: **18.03.89 DE 3909017**

(43) Veröffentlichungstag der Anmeldung:
**06.03.91 Patentblatt 91/10**

(45) Bekanntmachung des Hinweises auf die Patenterteilung:
**29.06.94 Patentblatt 94/26**

(84) Benannte Vertragsstaaten:
**AT BE CH DE DK ES FR GB IT LI LU NL SE**

(56) Entgegenhaltungen:
**EP-A- 0 051 347**
**EP-A- 0 192 888**
**US-A- 3 574 644**

(73) Patentinhaber: **METZELER SCHAUM GMBH**
**Donaustrasse 51**
**D-87700 Memmingen(DE)**

(72) Erfinder: **HEITMANN, Ulrich**
**Gotenstr. 1**
**D-8940 Memmingen(DE)**
Erfinder: **ROSSEL, Heribert**
**Lerchenstr. 6**
**D-8941 Buxheim(DE)**

(74) Vertreter: **Michelis, Theodor, Dipl.-Ing.**
**Seibert + Michelis**
**Rechtsanwälte und Patentanwälte**
**Tattenbachstrasse 9**
**D-80538 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Dialog Information Services, File 351, World Patent Index 81-90. Dialog accession no 90-008652, Nagamatsu M: 'Semi-non-combustible urethane foam obtained by mixing thermal expansion graphite in raw material of polyurethane, used for motor-car trim', JP1299870, A, 891204 9003 (Basic)

Dialog Information Services, File 350, World Patent Index 63-80, Dialog accession no 80-37322C/21, Mitsuboshi Belting KK: 'Polyurethane foam production by reacting polyol with polyfunctional isocyanate in presence of expanded graphite as flame retardant' JP55050035, A, 800411, 8021 (Basic)

**Beschreibung**

Die Erfindung bezieht sich auf ein Verfahren zur Herstellung eines flammwidrigen, elastischen Polyurethan-Weichschaumstoffes.

Aus der EP-A-0192888 ist es bekannt, einen flammwidrigen elastischen Polyurethan-Schaumstoff aus einem Schaumstoffreaktionsgemisch mit einem Polyol und einem organischen Polyisocyanat herzustellen, bei dem dem Reaktionsgemisch Bläh-Graphit beigemischt wird. Bei diesem Verfahren besteht jedoch die Gefahr, daß bei der Einlagerung des Bläh-Graphits mit den angegebenen Werten die Zellstruktur des aufschäumenden Schaumstoffs gestört wird, so daß sich dadurch schlechtere Dauergebrauchseigenschaften des Schaumstoffs ergeben.

Wenn nämlich die Teilchen des eingelagerten Bläh-Graphits zu groß sind, wird die Schaumreaktion erheblich behindert, d.h. das Reaktionsgemisch schäumt nicht gleichmäßig auf. Sind jedoch die Bläh-Graphit-Teilchen zu klein, so lassen die Flammschutz- und Bläheigenschaften je nach Korngrößenverteilung deutlich nach. Somit wird nur ein unzureichender Flammschutz erhalten. Außerdem werden die Gebrauchseigenschaften des Schaumstoffs vermindert.

Bei der Verwendung von pelletisiertem Graphitstaub auch in der entsprechenden Korngrößenverteilung wird aber einmal die Schaumstruktur empfindlich gestört, weil die Teilchen nicht als unregelmäßig geformte Plättchen, sondern in Kugelform vorliegen und sich damit nicht optimal in das Schaumgefüge einpassen. Vielmehr stören sie das Zellgefüge und führen damit zu einer Minderung der Gebrauchseigenschaften. Zum anderen sind die Bläheigenschaften derartiger Pellets und damit das Brandverhalten des Schaumstoffs erheblich beeinträchtigt.

Es ist darüberhinaus aus der US-PS 3,574,644 bekannt, Blähgraphit in Plättchenform in der Größenordnung von 10 bis etwa 325 mesh zu verwenden, wobei eine Größenordnung von 10 bis 60 mesh (0,25 - 2,0 mm) aus ästhetischen und Homogenitätsgründen bevorzugt wird. Dabei werden aber diese Blähgraphit-Plättchen dem fertigen Reaktionsgemisch zugemischt. Auf Grund der geringen Topfzeiten des schon reagierenden Schaumgemischs ist eine ausreichende Homogenisierung und damit auch gute Benetzung der einzelnen Plättchen nur schwer möglich. Außerdem können Agglomerationen kaum ausgeschlossen werden.

Der vorliegenden Erfindung liegt demgegenüber die Aufgabe zugrunde, einen flammwidrigen. elastischen Schaumstoff zu schaffen, der einerseits ein Brandverhalten zeigt, das auch den strengsten Forderungen und Brandtests. wie z.B. dem Kerosin-Brenner-Test nach der Prüfnorm FAR 25853 c voll Genüge leistet und der andererseits optimale Dauergebrauchseigenschaften mit gegenüber herkömmlich brennbaren Schaumstoffen kaum verminderten Werten aufweist.

Zur Lösung dieser Aufgabe ist erfindungsgemäß ein Verfahren zur Herstellung eines flammwidrigen elastischen Polyurethan-Weichschaumstoffes aus einem Schaumstoff-Reaktionsgemisch mit einem Polyol und Polyisocyanat sowie einem Anteil von Blähgraphit in Plättchenform als flammhemmendes Mittel vorgesehen, bei dem die Plättchen die Größenordnung der entstehenden Schaumstoff-Zellwände aufweisen und zunächst der Reaktionskomponente Polyol zugemischt und dadurch beim Aufschäumen dem Schaumstoff so eingelagert werden, daß sie zumindest einen Teil der Zellwände bilden.

Bei einem solchen Verfahren unter Verwendung von Blähgraphit in Plättchenform der angegebenen Größe werden sich die Graphitplättchen unmittelbar in der Zellwandung einlagern, d.h. die Zellwände werden praktisch durch die Graphitplättchen selbst gebildet und von Zellstegen aus reinem Schaumstoffmaterial umgeben, so daß dadurch die geringste Störung der Zellstruktur des Schaumes auftritt.

Das Einmischen der Blähgraphit-Plättchen zunächst allein in die Polyol-Komponente erlaubt ein erheblich sorgfältigeres Arbeiten, da die Topfzeit unbeschränkt ist und damit entsprechende größere Chargen bereits längere Zeit vor dem eigentlichen Schäumvorgang fertiggestellt werden können. Außerdem ist damit sichergestellt, daß eine optimale Vermischung und Benetzung der einzelnen Graphit-Plättchen erfolgt.

Besonders zweckmäßig ist es, wenn die Blähgraphit-Plättchen zunächst nur einem Teil des Polyols zugemischt werden, während der restliche Polyol-Anteil die übrigen Zusatzstoffe in Form von Aktivatoren, Beschleunigern, Vernetzern und sonstigen Flammschutzmitteln enthält.

Damit wird die Reaktions- und Lagerbeständigkeit der Graphit enthaltenden Komponente noch weiter verbessert.

Ferner ist es von Vorteil, wenn die Polyolkomponente vor dem Einmischen des Blähgraphits auf eine erhöhte Temperatur gebracht wird, um sie damit besser zu entgasen und ein Einrühren von Luft in die Polyol-Komponente weitgehend zu vermeiden. Durch die damit verbundene Viskositätserniedrigung wird auch die Benetzung verbessert und das Gemisch leichter entgast.

Das verwendete Bläh-Graphit besteht praktisch aus Graphit, zwischen dessen Netzebenen zum Beispiel $H_2SO_4$ oder $SO_4$ mit zwei freien negativen Valenzen, die sich an zwei freien positiven Valenzen eines Kohlenstoffringes anlagern, eingelagert ist. Dieses Graphit bläht sich beim Brennen des Schaumstoffes auf sein 100- bis 200-faches Volumen unter Abspaltung von zum Beispiel $SO_3$ und/oder $SO_2$ und Wasser auf. Dadurch wird ein Brennen, z.B. ein Weiterbrennen des Schaumstoffs weitgehend verhindert. Es bildet sich dabei eine lockere, geblähte Masse, die isolierend wirkt.

Die Größe der einzelnen Graphit-Plättchen liegt zweckmäßigerweise zwischen 0,3 und 1,0 mm, was einer Schaumstoff-Zellenzahl von etwa 10 bis 30/cm entspricht.

Ein derartiger Blähgraphit bewirkt zwar einen guten Brandschutz, hat jedoch oftmals nach dem Abbrennen der Polyurethan-Matrix nur einen schwachen Zusammenhalt, da kein Zusammenbacken der geblähten Graphitpartikel stattfindet. Es besteht vielmehr die Gefahr, daß die geblähten Partikel durch Flammdruck und der Thermik der Zündquelle zum wesentlichen abgeblasen werden, so daß dadurch die Schutzschicht auf dem noch nicht verbrannten Schaumstoffanteil wegfällt, so daß sich ggfs. der Brand zunächst weiter ausbreiten kann.

Um dies zu verhindern. ist in Weiterbildung der Erfindung vorgesehen, daß zusätzlich Casein in Pulverform im Polyol dispergiert wird.

Dieses Casein bildet unter Hitze praktisch eine koksartige Schicht, die ein Zusammenbacken der geblähten Graphitteilchen bewirkt und damit eine Verbesserung der Schutzwirkung des Blähgraphits herbeiführt. Damit werden auch die darunterliegenden, noch nicht verbrannten Schichten sicher geschützt.

Es ist aber auch möglich, gehärtetes und (vorzugsweise mit Formaldehyd oder Isocyanat) denaturiertes Casein im Polyol zu dispergieren.

Der Anteil des Casein sollte dabei vorzugsweise 5 bis 30 Gew.%, bezogen auf das eingesetzte Polyol-Gewicht, betragen.

Das Casein selbst kann dabei bis zur dreifachen Menge des verwendeten Blähgraphits eingesetzt werden.

Der Anteil des Blähgraphits selbst sollte vorzugsweise 5 bis 40 Gewichtsteile, bezogen auf das eingesetzte Polyolgewicht, betragen.

Das Raumgewicht eines so gefüllten Schaumstoffes kann dann etwa 20 bis 80 kg/m$^3$ betragen.

Um darüberhinaus im Brandfall die Entzündung der entstehenden Pyrolysegase zu verhindern, ist es zweckmäßig, im Schaumstoff-Reaktionsgemisch noch ein zusätzliches Flammschutzmittel in Form von halogenierten Phosphorsäureestern zu verwenden, wie dies im Prinzip aus der JP-A-50/159593 bekannt ist.

Von besonderem Vorteil ist es, wenn dem das Blähgraphit enthaltenden Polyol noch zusätzlich Rauchverminderer zugemischt werden, um damit in einem Brandfall ein Qualmen bzw. eine Rauchentwicklung erheblich zu reduzieren, was zum Erkennen möglicher Fluchtwege in geschlossenen Räumen sehr wesentlich ist.

Als Rauchverminderer dienen dabei die an sich bekannten Schwermetallverbindungen, insbesondere Cyanide und Komplexe Ferrocyanide, Metalloxide wie Nickel-II-Oxid, Eisen-III-Oxid, Molybdän-VI-Oxid, Vanadium-V-Oxid sowie z.B. Kupferhydroxidphosphat, Zinkborat, Ammoniumoctamolybdat, Aluminiumhydroxid, Magnesiumhydroxid und Ferrocen, wobei sich Ferrocen als das wirksamste Mittel erwiesen hat.

Entsprechend der nachfolgenden Tabelle I wird anhand einer Reihe von Beispielen die Wirkung herkömmlichen Bläh-Graphits und der erfindungsgemäßen Bläh-Graphit-Modifikation untersucht. Es wurden dabei 11 verschiedene Rezepturen, zum Teil auch unter Zusatz von Rauchverminderen, zur Herstellung flammwidrig ausgerüsteter Weichschaumstoffe eingesetzt, wie sich im einzelnen aus der Tabelle ergibt.

4

TABELLE I

| Rezeptur-Nr.: | 1 | 2 | 3 | 4 | 5 | 6 | 7 | 8 | 9 | 10 | 11 |
|---|---|---|---|---|---|---|---|---|---|---|---|
| Polyol (a) | 100 | 100 | 100 | 100 | 100 | 100 | - | 85 | 85 | 85 | 85 |
| Polyol (b) | - | - | - | - | - | - | 100 | - | - | - | - |
| Polyol (c) | - | - | - | - | - | - | - | 15 | 15 | 15 | 15 |
| Wasser | 3.0 | 3.0 | 3.0 | 3.0 | 3.0 | 3.0 | 3.0 | 3.0 | 3.0 | 3.0 | 3.0 |
| Aminaktivator (d) | 0,4 | 0,4 | 0,4 | 0,4 | 0,4 | 0,4 | - | - | 0,4 | 0,4 | 0,4 |
| Aminaktivator (e) | - | - | - | - | - | - | 0,15 | - | - | - | - |
| Aminaktivator (f) | - | - | - | - | - | - | 0,15 | - | - | - | - |
| Beschleuniger (g) | 0,1 | 0,1 | 0,1 | 0,1 | 0,1 | 0,1 | - | 0,1 | 0,1 | 0,1 | 0,1 |
| Beschleuniger (h) | - | - | - | - | - | - | 0,4 | - | - | - | - |
| Stabilisator (i) | 1,2 | 1,2 | 1,2 | 1,2 | 1,2 | 1,2 | - | 1,2 | 1,2 | 1,2 | 1,2 |
| Stabilisator (k) | - | - | - | - | - | - | 0,9 | - | - | - | - |
| Vernetzer (l) | 0,8 | 0,8 | 0,8 | 0,8 | 0,8 | 0,8 | - | 0,8 | 0,8 | 0,8 | 0,8 |
| Isocyanat (m) | 28,3 | 28,3 | 28,3 | 28,3 | 28,3 | 28,3 | 40,0 | 28,3 | 28,3 | 28,3 | 28,3 |
| Isocyanat (n) | 7,1 | 7,1 | 7,1 | 7,1 | 7,1 | 7,1 | - | 7,1 | 7,1 | 7,1 | 7,1 |
| Flammschutz-mittel (o) | 10,0 | - | - | - | - | - | 5 | 10,0 | 10,0 | 10,0 | 10,0 |
| Casein | - | - | - | - | - | 20,0 | - | 20,0 | - | - | - |
| Blähgraphit korngr. 0,2-1mm | 30,0 | - | - | - | - | 20,0 | 30,0 | 20,0 | 30,0 | 30,0 | 30,0 |
| Blähgraphit Pulver 0,2mm | - | 30,0 | 50,0 | - | - | - | - | - | - | - | - |
| Blähgraphit (pelletisiertes Pulver/Plättchen-gemisch) | - | - | - | 30,0 | 50,0 | - | - | - | - | - | - |
| Rauchgasverminderer (p) | | | | | | | | - | 2 | - | 0 |
| Rauchgasverminderer (q) | | | | | | | | - | - | 2 | 0 |

In der nachfolgenden Tabelle II sind die verwendeten Rezepturbestandteile der Rezepturen nach Tabelle I im einzelnen erläutert:

TABELLE II

| Polyol (a) Polyetherpolyol | z.B. Desmophen 3973 (Fa. Bayer) |
|---|---|
| Polyol (b) Polyetherpolyol | z.B. Desmophen 7160 (Fa. Bayer) |
| Polyol (c) polymergefüllt | z.B. Desmophen 7619 (Fa. Bayer) |
| Aminaktivator (d) | z.B. Polycat 77 (Air Products) |
| Aminaktivator (e) | z.B. Dabco 33 LV (Air Products) |
| Aminaktivator (f) | z.B. Bulab 600 (Fa. Buckmann, Bad Homburg) |
| Beschleuinger (g) | z.B. Dibutylzinndilaurat |
| Beschleuniger (h) | z.B. Zinn-II-octoat |
| Stabilisator (i) | z.B. B 4690 (Fa. Goldschmidt) |
| Stabilisator (k) | z.B. B 4900 (Fa. Goldschmidt) |
| Vernetzer (l) | z.B. V 56 (Fa. Bayer) |
| Isocyanat (m) | z.B. Desmodur T 80 (Fa. Bayer) |
| Isocyanat (n) | z.B. Desmodur 44 V 20 (Fa. Bayer) |
| Flammschutzmittel (o) | z.B. Thermolin 101 (Fa. Olin) |
| Rauchgasverminder (p) | Kupferhydroxidphosphat |
| Rauchgasverminder (q) | Ferrocen |

Die Herstellung eines elastischen Schaumstoffs wird nachfolgend an einem Beispiel entsprechend der Rezeptur Nr. 11 im einzelnen erläutert:

850 g eines Polyols (a) werden mit 150 g eines Polyols (c) mittels eines Propellerrührer gemischt und unter weiterem Rühren werden 300 g Blähgraphit definierter Plättchengröße zugegeben, bis eine möglichst gleichmäßige Suspension des Graphits im Polyol erhalten ist. Die Ausbildung des Rührers und die Rührgeschwindigkeit sind dabei so zu wählen, daß eine möglichst geringe Scherwirkung auf den Graphit ausgeübt wird, so daß die ursprüngliche Plättchengröße weitgehend erhalten bleibt. Bevorzugt werden dabei die Polyole auf eine Temperatur von 40 bis 70°C aufgeheizt, wodurch eine deutliche Erniedrigung der Viskosität des Polyols und damit eine Verbesserung der Benetzung des Graphits bewirkt wird. Anschließend werden gemäß der Rezeptur die übrigen Bestandteile Wasser, Stabilisatoren, Beschleuniger, Aktivatoren, Flammschutz und ggfs. Rauchgasverminderer und Vernetzer zugesetzt und eingerührt.

Die erhaltene Mischung wird in einem Gewichtsverhältnis von 145:35 mit einer Mischung aus einem Isocyanat (m) und einem Isocyanat (n) im Gewichtsverhältnis 70:30 unter Rühren vermischt und nach etwa 5 bis 10 Sekunden in eine Form zur Reaktion gegeben. Der Schaum ist nach ca. 5 bis 10 Minuten entformbar, wobei die Anwendung von Wärme von Vorteil ist.

Die physikalischen Eigenschaften eines solchen Schaums werden nach 72 h Lagerung im Normklima bestimmt, woraus sich die nachfolgend in Tabelle III angeführten Werte ergeben.

TABELLE III

| | Schaumstoff gem. Rezeptur 11 | Vergleichsschaumstoff ohne Flammschutz und Blähgraphit |
|---|---|---|
| Rohdichte (kg/m$^3$) DIN 53 420 | 60 | 45 |
| Zugfestigkeit (kPa) DIN 53 571 | 115 | 150 |
| Bruchdehnung (%) DIN 53 371 | 115 | 125 |
| Druckverformungsrest (%) DIN 53 572 | 5 | 6 |
| Dauerschwingversuch DIN 53 574 | | |
| Härteverlust (%) | 13 | 14 |
| Höhenverlust (%) | 1,5 | 2 |

Besonders hervorzuheben sind bei dem gem. vorstehenden Beispiel hergestellten Schaumstoff der gute Druckverformungsrest sowie der geringe Höhen- und Härteabfall nach dem Dauerschwingversuch, woraus sich ergibt, daß die Gebrauchseigenschaften gegenüber einem herkömmlichen, nicht flammwidrig ausgerüsteten Schaumstoffs kaum verändert sind.

Um bei einem derartigen Herstellungsverfahren die Reaktions- und Lagerbeständigkeit der das Blähgraphit enthaltenden Komponenten, d.h. deren Topfzeit zu erhöhen und zu verbessern ist es von besonderem Vorteil, wenn der Blähgraphit zunächst nur mit einer Teilmenge des zweckmäßigerweise weitgehend wasserfreien Polyols, das weniger als 0,1% Wasser enthält, gemischt wird und erst kurze Zeit vor der Reaktion mit dem Isocyanat mit der Restmenge des Polyols und dem Gemisch bestehend aus Wasser, Aktivatoren, Beschleunigern, Vernetzer, weiteren Flammschutzmitteln und dem Rauchgasverminderer zusammengebracht und vermischt wird.

Dabei ist aber stets darauf zu achten, daß ein Absetzen des im Polyol suspendierten Blähgraphits stets durch vorsichtiges Rühren oder Umpumpen verhindert wird.

Wie im vorstehenden Beispiel beschrieben, bei dem das Reaktionsgemisch in der angegebenen geringen Menge in einer Form zur Reaktion gebracht wird, wird selbstverständlich sinngemäß auch bei der Verarbeitung der Komponenten auf den bekannten Hoch- und Niederdruckmaschinen zur Herstellung von Block- und Formschäumen verfahren.

Wie sich aus der Auflistung der Rezepturen gem. Tabelle I ergibt, wurden 6 Rezepturen mit den erfindungsgemäßen Blähgraphit-Plättchen untersucht und mit jeweils 2 Rezepturen mit pulverförmigen Blähgraphit sowie peletisiertem Pulver in unterschiedlichen Blähgraphitanteilen verglichen, wobei je zwei Rezepturen noch mit Rauchgasverminderern versehen wurden.

Die so erhaltenen 11 verschienen Schaumstoffe wurden dann herkömmlichen Brandtests unterzogen, dessen Ergebnisse nachfolgend in Tabelle IV aufgeführt sind.

### TABELLE IV

| Test: | Crib 7 | Crib 4 | UIC | UL 94 vertikal | FAR 25853b | FAR 25853c |
|---|---|---|---|---|---|---|
| Beispiel 1 | B. | B. | B. | V0 | B. | B. |
| 2 | N.B. | N.B. | N.B. | V2 | N.B. | N.B. |
| 3 | N.B. | N.B. | N.B. | V2 | N.B. | N.B. |
| 4 | N.B. | B. | B. | V2 | N.B. | N.B. |
| 5 | B. | B. | B. | V0 | B. | N.B. |
| 6 | B. | B. | B. | V0 | B. | B. |
| 7 | B. | B. | B. | V0 | B. | B. |
| 8 | B. | B. | B. | V0 | B. | B. |
| 9 | B. | B. | B. | V0 | B. | B. |
| 10 | B. | B. | B. | V0 | B. | B. |
| 11 | B. | B. | B. | V0 | B. | B. |
| B = Bestanden | | | | | | |
| N.B. = Nicht Bestanden | | | | | | |

Der Test Crib 4 und Crib 7 entspricht dem British Standard 5852 part. 2, bei dem eine auf das zu untersuchende Material aufgestapelte Holzkrippe abgebrannt und das Brandverhalten des darunterbefindlichen Materials beurteilt wird. Entsprechend vorgegebener Spezifikationen kann dann dieser Test als "Bestanden" oder "Nicht Bestanden" gelten. Der Test Crib 7 entpricht einer höheren Anforderung, da die Zündquelle spezifikationsgemäß eine größere Masse aufweist.

Bei dem Test UIC handelt es sich um ein Testverfahren der Union International Chemin de Fère, wonach 100g Papier als Kissen zusammengeballt auf dem zu untersuchenden Material verbrannt werden.

Bei dem Test UL 94 vertikal der Underwriters Labatories wird ein 13x13x127 mm großer Streifen des zu untersuchenden Materials von unten beflammt, und dann Brennlänge, Brennzeit und ein mögliches Abtropfen des Brennschmelze gemessen und entsprechend klassifiziert, wobei V0 einen höheren Brandschutz kennzeichnet als z.B. V2.

Bei den Tests FAR 25853 b und c handelt es sich um den Bunsenbrenner- und den Kerosinbrennertest, bei dem das Material aus kurzer Entfernung mit einer sehr heißen und intensiven Flamme über einen vorgegebenen Zeitraum beflammt wird.

Wie sich aus diesem Testergebnis eindeutig herauslesen läßt, zeigten das schlechteste Brandverhalten die Rezepturen mit Bläh-Graphitpulver einer Gradation von unter 0,2 mm, die auch in höheren Konzentrationen praktisch keine ausreichende Wirkung zeigten. Lediglich die Rezeptur mit einem Anteil von 50 Gew.-Teilen Bläh-Graphit ergab ein besseres Ergebnis, wobei jedoch auch der Kerosinbrennertest nicht bestanden wurde.

Demgegenüber haben Schaumstoffe der Rezepturen 1 und 6 bis 11 mit der erfindungsgemäßen Bläh-Graphitkorngrößenverteilung alle Tests hervorragend bestanden und jeweils die höchste Klassifizierung erreicht.

Bezüglich der Verwendung von Rauchgasverminderen in den Rezepturen 9 und 10 sowie der Vergleichsrezeptur 11 ohne Rauchgasverminderer werden die entsprechenden Werte in der nachfolgenden Tabelle V angegeben.

TABELLE V

| Rezeptur | 9 | 10 | 11 |
|---|---|---|---|
| Ds | 0,55 | 0,47 | 0,86 |
| tm (s) | 156 | 111 | 141 |
| Ds = maximale optische Dichte | | | |
| tm = Zeitpunkt des Auftretens der maximalen optischen Dichte | | | |

Die Prüfung der Rauchgasdichte erfolgte dabei nach ISO Draft Technical Report 5924. Daraus ergibt sich, daß bei Verwendung der angegebenen Rauchgasverminderer die Rauchgasdichte um etwa die Hälfte geringer ist als bei einem flammwidrig behandelten Schaumstoff ohne Rauchgasverminderer, d.h. die Sicht war ungefährt nur zu 50% eingeschränkt, wobei ohne weiteres noch klare Konturen auch auf größere Entfernung sichtbar blieben.

Anhand des beigefügten Fotos eines mikroskopierten Schnittes durch einen erfindungsgemäß ausgerüsteten Schaumstoff in etwa 100-facher Vergrößerung ist die Einlagerung der Blähgraphit-Plättchen noch einmal besonders deutlich zu erkennen.

Der Schaumstoff ist im wesentlich aufgebaut aus den relativ massiven Zellstegen 1, die das eigentliche Gerüst des Schaumstoffs bilden und wesentlich für die Gebrauchseigenschaften maßgebend sind, sowie die sich zwischen den Zellstegen 1 ausbildenden sehr dünnen Zellwänden 2 aus Schaumstoff. Bei der angegebenen Wahl der Größe der Blähgraphit-Plättchen und dem angegebenen Herstellungsverfahren haben sich nunmehr einige Blähgraphit-Plättchen 3 so zwischen den Zellstegen 1 eingelagert, daß sie damit praktisch die ursprüngliche Schaumstoff-Zellwand bilden. Durch diese Einlagerung allein als Zellwand wird damit die Gebrauchseigenschaft des Schaumstoffs nur unwesentlich verändert, andererseits ergibt sich aber ein hoher Brandschutz, da eine sehr große Fläche der Schaumstoffzellen jetzt von diesen Graphit-Plättchen besetzt ist.

Zusätzlich ist an einem Zellstegknotenpunkt ein eingelagertes Graphitteil 4 praktisch in Staubform zu erkennen, wie sie selbstverständlich auch vorkommen können. Wegen der Kleinheit konnte sich dieser Graphitstaub 4 in einem Zellsteg bzw. einem Zellstegknoten einlagern, wodurch jedoch die Zellstegstruktur unterbrochen und damit wesentliche Werte für die die physikalischen Eigenschaften des Schaumstoffs verändert sein können, so daß derart kleine Graphitteilchen möglichst vermieden werden sollen.

Insgesamt zeigt sich also, daß die Verwendung von Blähgraphit in Plättchenform in einer Größenverteilung, die der Zellstruktur des Schaumstoffs entspricht und die angegebene Herstellung des Reaktionsgemisch mit dem Blähgraphit ein Aufschäumen des Schaumstoffs am wenigsten behindert und damit die Dauergebrauchseigenschaften gegenüber einem nichtbehandelten Schaumstoff auf praktisch gleichen Niveau hält, andererseits aber das Brandverhalten erheblich verbessert.

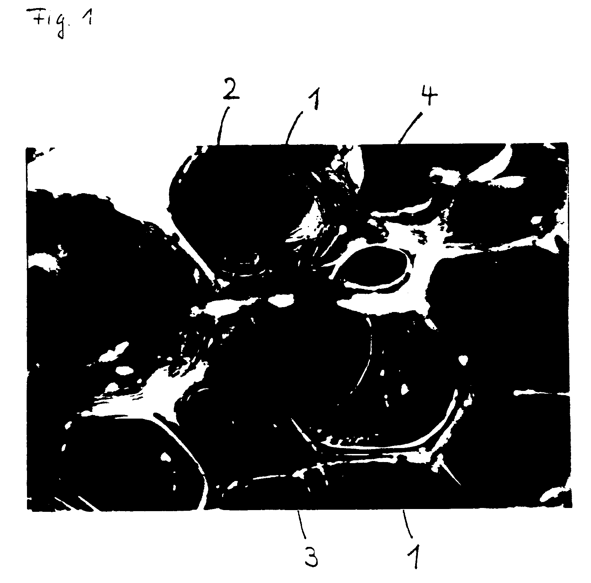

**Patentansprüche**

1.  Verfahren zur Herstellung eines flammwidrigen, elastischen Polyurethan-Weichschaumstoffes, aus einem Schaumstoff-Reaktionsgemisch mit einem Polyol und einem Polyisocyanat sowie einem Anteil von Blähgraphit in Plättchenform als flammhemmendes Mittel, bei dem die Plättchen die Größenordnung der entstehenden Schaumstoff-Zellwände aufweisen und zunächst der Reaktionskomponente Polyol zugemischt und dadurch beim Aufschäumen dem Schaumstoff so eingelagert werden, daß sie zumindest einen Teil der Zellwände bilden.

2.  Verfahren nach Anspruch 1, dadurch gekennzeichnet, daß die Blähgraphit-Plättchen zunächst nur einem Teil des Polyols zugemischt werden, während der restliche Polyol-Anteil die übrigen Zusatzstoffe in Form von Aktivatoren, Beschleunigern, Vernetzern und sonstigen Flammschutzmitteln enthält.

3.  Verfahren nach Anspruch 1 oder 2, dadurch gekennzeichnet, daß die Polyole vor dem Einmischen des Blähgraphits auf eine erhöhte Temperatur gebracht werden.

EP 0 414 868 B1

4. Verfahren nach Anspruch 1 oder 2, dadurch gekennzeichnet, daß dem das Blähgraphit enthaltenen Polyol zusätzlich Rauchverminderer zugemischt werden.

5. Verfahren nach Anspruch 1 oder 2, dadurch gekennzeichnet, daß die Graphitplättchen eine Größe von etwa 0,3 bis 1,0 mm aufweisen.

6. Verfahren nach Anspruch 1 oder 2, dadurch gekennzeichnet, daß zusätzlich Casein in Pulverform im Polyol dispergiert wird.

7. Verfahren nach Anspruch 6, dadurch gekennzeichnet, daß gehärtetes und denaturiertes Casein im Polyol dispergiert wird.

8. Verfahren nach Anspruch 6 oder 7, dadurch gekennzeichnet, daß der Anteil des Caseins 5 bis 30 Gewichtsteile, bezogen auf das eingesetzte Polyol-Gewicht, beträgt.

9. Verfahren nach einem der Ansprüche 6 bis 8, dadurch gekennzeichnet, daß Casein bis zur dreifachen Menge des verwendeten Blähgraphits eingesetzt wird.

10. Verfahren nach Anspruch 1 oder 9, dadurch gekennzeichnet, daß der Anteil des Blähgraphits 5 bis 40 Gewichtsteile, bezogen auf das eingesetzte Polyol-Gewicht, beträgt.

11. Verfahren nach einem der Ansprüche 1 bis 10, dadurch gekennzeichnet, daß das Raumgewicht des gefüllten Schaumstoffs 20 bis 80 kg/m$^3$ beträgt.

12. Verfahren nach Anspruch 1 bis 11, dadurch gekennzeichnet, daß als zusätzliche Flammschutzmittel halogenierte Phosphorsäureesther verwendet werden.

**Claims**

1. Process for the production of a flame-resistant, elastic, flexible polyurethane foam from a foam reaction mixture with a polyol and polyisocyanate together with a proportion of intumescent graphite in flake form as the flame retardant agent, in which the flakes are of the same order of magnitude as the foam cell walls produced and are initially mixed into the polyol reaction component and are consequently incorporated into the foam during foaming in such a manner that they form at least some of the cell walls.

2. Process according to claim 1, characterised in that the intumescent graphite flakes are initially mixed into only a proportion of the polyol, while the remainder of the polyol contains the customary additives in the form of activators, accelerators, crosslinking agents and other flame retardants.

3. Process according to claim 1 or 2, characterised in that the polyols are raised to an elevated temperature before the intumescent graphite is mixed in.

4. Process according to claim 1 or 2, characterised in that smoke suppressants are additionally mixed into the polyol containing the intumescent graphite.

5. Process according to claim 1 or 2, characterised in that the graphite flakes have a size of approximately 0.3 to 1.0 mm.

6. Process according to claim 1 or 2, characterised in that powdered casein is additionally dispersed in the polyol.

7. Process according to claim 6, characterised in that hardened and denatured casein is dispersed in the polyol.

8. Process according to claim 6 or 7, characterised in that the content of casein is 5 to 30 parts by weight related to the weight of the polyol used.

9

9. Process according to one of claims 6 to 8, characterised in that the casein is used in an amount of up to three times that of the intumescent graphite.

10. Process according to claim 1 or 9, characterised in that the content of intumescent graphite is 5 to 40 parts by weight related to the weight of the polyol used.

11. Process according to one of claims 1 to 10, characterised in that the bulk density of the filled foam is 20 to 80 kg/m$^3$.

12. Process according to claims 1 to 11, characterised in that halogenated phosphoric acid esters are used as additional flame retardants.

**Revendications**

1. Procédé de fabrication d'une mousse souple de polyuréthane élastique et ignifuge en un mélange réactionnel mousse comprenant un polyol et un polyisocyanate, ainsi qu'une proportion de graphite gonflant sous forme de plaquette en tant qu'agent ignifuge, dans lequel les plaquettes ont l'ordre de grandeur des parois cellulaires de mousse engendrées et sont mélangées d'abord au constituant de réaction qu'est le polyol et sont ainsi incorporées à la mousse lors du moussage, de manière à former au moins une partie des parois cellulaires.

2. Procédé suivant la revendication 1, caractérisé en ce qu'il consiste à n'ajouter d'abord les plaquettes de graphite gonflant qu'à une partie du polyol, tandis que le reste du polyol contient les autres additifs sous forme d'activateurs, d'accélérateurs, d'agents de réticulation et d'autres agents de protection vis-à-vis du feu.

3. Procédé suivant la revendication 1 ou 2, caractérisé en ce qu'il consiste à porter les polyols à une température haute avant d'y introduire le graphite gonflant.

4. Procédé suivant la revendication 1 ou 2, caractérisé en ce qu'il consiste à ajouter en outre des agents fumivores au polyol contenant du graphite gonflant.

5. Procédé suivant la revendication 1 ou 2, caractérisé en ce que les plaquettes de graphite ont une dimension de 0,3 à 1,0 mm environ.

6. Procédé suivant la revendication 1 ou 2, caractérisé en ce qu'il consiste à disperser en outre de la caséine sous forme pulvérulente dans le polyol.

7. Procédé suivant la revendication 6, caractérisé en ce qu'il consiste à disperser de la caséine durcie et dénaturée dans le polyol.

8. Procédé suivant la revendication 6 ou 7, caractérisé en ce que la proportion de caséine représente de 5 à 30 fois le poids du polyol engagé.

9. Procédé suivant l'une des revendications 6 à 8, caractérisé en ce que la caséine représente jusqu'à trois fois la quantité du graphite gonflant utilisé.

10. Procédé suivant la revendication 1 ou 9, caractérisé en ce que la proportion de graphite gonflant représente de 5 à 40 fois le poids du polyol engagé.

11. Procédé suivant l'une des revendications 1 à 10, caractérisé en ce que la masse volumique apparente de la mousse chargée est comprise entre 20 et 80 kg/m$^3$.

12. Procédé suivant l'une des revendications 1 à 11, caractérisé en ce qu'il consiste à utiliser comme agent supplémentaire de protection vis-à-vis du feu des esters halogénés de l'acide phosphorique.

Fig. 1